# EUROPÄISCHE PATENTANMELDUNG

(11) **EP 4 843 928 A1**
(43) Veröffentlichungstag der Anmeldung: **25.11.2026**
(21) Anmeldenummer: 26179664.3
(22) Anmeldetag: 19.05.2026
(51) Int. Cl.: B65G 23/08, B65G 39/00, B65G 23/23

(54) **ANTRIEBSEINHEIT FÜR EINE LEBENSMITTELPRODUKTFÖRDERVORRICHTUNG, LEBENSMITTELPRODUKTFÖRDERVORRICHTUNG UND LEBENSMITTELVERARBEITUNGSSYSTEM**

(30) Priorität: 21.05.2025 DE 102025119832
(71) Anmelder: MULTIVAC Sepp Haggenmüller SE & Co. KG, 87787 Wolfertschwenden (DE)
(72) Erfinder: Arend, Tom, 87787 Wolfertschwenden (DE)
(74) Vertreter: Weickmann & Weickmann PartmbB

(57) **Zusammenfassung**

Die Erfindung betrifft eine Antriebseinheit (100) für eine Lebensmittelproduktfördervorrichtung (140), umfassend eine Aufnahmeeinheit (110), welche dazu ausgebildet und bestimmt ist, hinsichtlich eines rotatorischen Freiheitsgrads um eine Rotationsachse (R) fest mit der Lebensmittelproduktfördervorrichtung (140) verbunden zu werden, und welche dazu eingerichtet ist, ein Antriebselement (112) aufzunehmen, welches dazu eingerichtet ist, ein, vorzugsweise drehbares, Magnetfeld zu erzeugen, und ein magnetisch betätigbares Abtriebselement (114), welches dazu eingerichtet ist, mittels des durch das Antriebselement (112) erzeugten Magnetfelds um die Rotationsachse (R) drehend angetrieben zu werden, wobei die Antriebseinheit (100) ferner ein Trennelement (116) umfasst, welches zwischen dem Antriebselement (112) und dem Abtriebselement (114) angeordnet ist und dazu eingerichtet ist, ein Hindurchtreten von Flüssigkeiten und/oder Festkörpern von einer dem Abtriebselement (114) zugewandten Seite des Trennelements (116) zu einer dem Antriebselement (112) zugewandten Seite des Trennelements (116) und/oder umgekehrt im Wesentlichen vollständig zu unterbinden.

## Beschreibung

Die Erfindung betrifft eine Antriebseinheit für eine Lebensmittelproduktfördervorrichtung, eine Lebensmittelproduktfördervorrichtung und ein Lebensmittelverarbeitungssystem.

Im Bereich von Lebensmittelverarbeitungseinheiten, wie beispielsweise Aufschneidemaschinen, werden Lebensmittelproduktfördervorrichtungen mit mehreren Spuren, welche spurindividuell antreibbar sind, herkömmlich beispielsweise mit einem "Welle in Welle"-Aufbau realisiert. Dabei sind mehrere konzentrische Wellen ineinander angeordnet, so dass jede Welle unabhängig von den anderen angetrieben werden kann. Diese Bauweise ermöglicht es, unterschiedliche Bewegungen oder Geschwindigkeiten für einzelne Spuren zu realisieren, ohne dass separate Antriebe extern montiert werden müssen. Alternativ werden derartige Lebensmittelproduktfördervorrichtungen herkömmlich auch über einen Kranz aus Bandgurten angetrieben. Hierbei sind mehrere Bandgurte beispielsweise linear angeordnet, wobei jeder Gurt über einen eigenen Antrieb verfügt und somit unabhängig von den anderen betrieben werden kann.

Beide Lebensmittelproduktfördervorrichtungen bieten eine präzise und flexible Steuerung, haben jedoch erhebliche Nachteile. Der "Welle in Welle"-Aufbau ist zwar platzsparend, aber mechanisch komplex, teuer in der Fertigung und schwer zu warten. Die Variante mit einem Kranz aus Bandgurten erfordert mehrere externe Antriebe, zu welchen die Bandgurte geführt werden müssen, wodurch der Platzbedarf, die Kosten und der Wartungsaufwand erhöht sind. Somit stellen beide Systeme technisch anspruchsvolle Ausführungen einer Lebensmittelproduktfördervorrichtung dar.

Es ist daher Aufgabe der Erfindung, eine Antriebseinheit für eine Lebensmittelproduktfördervorrichtung bereitzustellen, welche platzsparend, wartungsfreundlich, hygienisch sowie kostengünstig realisiert werden kann.

Diese Aufgabe wird erfindungsgemäß durch eine Antriebseinheit für eine Lebensmittelproduktfördervorrichtung gelöst, umfassend eine Aufnahmeeinheit, welche dazu ausgebildet und bestimmt ist, mit der Lebensmittelproduktfördervorrichtung verbunden zu werden, und welche dazu eingerichtet ist, ein Antriebselement aufzunehmen, welches dazu eingerichtet ist, ein, vorzugsweise drehbares, Magnetfeld zu erzeugen, und ein magnetisch betätigbares Abtriebselement, welches dazu eingerichtet ist, mittels des durch das Antriebselement erzeugten Magnetfelds um eine Rotationsachse drehend angetrieben zu werden, wobei die Antriebseinheit ferner ein Trennelement umfasst, welches zwischen dem Antriebselement und dem Abtriebselement angeordnet ist und dazu eingerichtet ist, ein Hindurchtreten von Flüssigkeiten und/oder Festkörpern von einer dem Abtriebselement zugewandten Seite des Trennelements zu einer dem Antriebselement zugewandten Seite des Trennelements und/oder umgekehrt im Wesentlichen vollständig zu unterbinden.

Durch die erfindungsgemäße Antriebseinheit kann einerseits der gewünschte Effekt erzielt werden, dass die Antriebseinheit gegenüber dem Hindurchtreten von Flüssigkeiten und/oder Festkörpern zu dem magnetisch betätigbaren Antriebselement dicht verschlossen ausgebildet ist, wodurch sowohl im Betrieb als auch bei umfangreichen Reinigungsarbeiten vorzugweise keine Fremdstoffe zu dem Antriebelement gelangen können. Anderseits ist zusätzlich oder alternativ auch ein Hindurchtreten von Flüssigkeiten und/oder Festkörpern von der dem Antriebselement zugewandten Seite des Trennelements zu der dem Abtriebselement zugewandten Seite des Trennelements im Wesentlichen vollständig unterbunden, so dass auch keine Flüssigkeiten und/oder Festkörper von dem Antriebselement zu dem Abtriebselement und damit gegebenenfalls zu einem durch die Lebensmittelproduktfördervorrichtung geförderten Lebensmittel gelangen können. Somit können das Antriebselement und das Abtriebselement hermetisch getrennt voneinander ausgebildet sein. Durch die erfindungsgemäße Lösung wird daher eine Abdichtung der rotierenden und nicht-rotierenden Bauteile gegeneinander grundsätzlich vereinfacht, wodurch die Antriebseinheit höchsten Hygienestandards gerecht werden kann, da eine problemlose Reinigung von außen ermöglicht wird. Andererseits kann im Vergleich zu bekannten Ausführungen von Antriebseinheiten der eingangs genannten Art der Bauraum reduziert und/oder optimiert werden.

Die Aufnahmeeinheit kann dazu ausgebildet und bestimmt sein, hinsichtlich eines rotatorischen Freiheitsgrads um die Rotationsachse fest mit der Lebensmittelproduktfördervorrichtung verbunden zu werden.

Das Antriebselement kann in diesem Zusammenhang auch als Stator bezeichnet werden, während das Abtriebselement als Rotor bezeichnet werden kann.

Das Trennelement, welches insbesondere als Trennhülse ausgebildet sein kann, ist vorzugsweise ein magnetisch durchlässiges Trennelement, welches beispielsweise eine magnetische Permeabilitätszahl im Bereich von 1 (Vakuum) bis maximal 1,05 aufweisen kann. Hierbei kann es sich beispielsweise um austenitischen Stahl, d.h. nichtrostenden Stahl, handeln. Das Trennelement kann ferner in radialer Richtung eine Abmessung aufweisen, welche kleiner ist als eine entsprechende Abmessung des Abtriebselements, das heißt das Trennelement kann entsprechend dünnwandig ausgebildet sein.

Das Magnetfeld kann vorzugsweise ein "drehbares Magnetfeld" sein, das heißt ein Magnetfeld, dessen Richtung und/oder Stärke sich zeitlich verändern kann, wobei es beispielsweise eine kreisförmige oder rotierende Bewegung ausführen kann.

Es ist ferner denkbar, dass mehrere im Wesentlichen baugleiche Antriebseinheiten an einer gemeinsamen Aufnahmeeinheit, insbesondere im Wesentlichen unmittelbar, vorzugsweise konzentrisch, benachbart angeordnet sein können. In einem derartigen Aufbau kann darüber hinaus auch nur ein Trennelement vorgesehen sein, welches dazu eingerichtet ist, zwischen den jeweiligen Antriebselementen und Abtriebselementen der benachbarten Antriebseinheiten angeordnet zu sein, um diese jeweils voneinander zu trennen.

Die Antriebseinheit kann ferner einen Signalgeber, welcher vorzugsweise in dem Abtriebselement integriert ist, und eine Sensoreinheit umfassen, welche mit einer Steuereinheit der Antriebseinheit in Signalverbindung stehen kann, wobei der Signalgeber und die Sensoreinheit gemeinsam dazu eingerichtet sein können, Informationen in Bezug auf die Antriebseinheit, vorzugsweise das Abtriebselement, insbesondere in Bezug auf eine Position, eine Drehzahl und/oder eine Drehrichtung des Abtriebselements, zu erfassen. Hierbei kann es sich um einen sogenannten "Encoder" handeln, welcher eine Regelung der Antriebseinheit durch ein kontinuierliches Empfangen von Rückkopplungssignalen bereitstellt, um beispielsweise Geschwindigkeit, (Dreh-)Winkel und Position präzise zu steuern. Demnach kann der Encoder als "Auge" der Antriebseinheit fungieren, welches die Bewegung des Motors in Echtzeit überwacht, und sicherstellen, dass die Antriebseinheit den gegebenen Anweisungen genau folgt.

Die Steuereinheit kann dazu eingerichtet sein, die Informationen von der Sensoreinheit zu erhalten und das Antriebselement, insbesondere das Magnetfeld des Antriebselements, unter Verwendung der Informationen der Sensoreinheit zu steuern. Somit kann die Antriebseinheit in präzisem Austausch von Sensoreinheit und Steuereinheit gesteuert werden.

Das Abtriebselement kann wenigstens teilweise aus Kunststoff ausgebildet sein. Eine derartige Ausbildung des Abtriebselements kann eine Gewichtsreduzierung der zu bewegenden, d.h. rotierenden, Masse und darüber hinaus eine vereinfachte/kostengünstige Herstellung ermöglichen.

Das Abtriebselement kann einen Permanentmagnet umfassen, welcher vorzugsweise in das Abtriebselement eingebettet sein kann. "Eingebettet" kann hier bedeuten, dass der Permanentmagnet teilweise oder im Wesentlichen vollständig von dem Abtriebselement umgeben ist, insbesondere in einen aus Kunststoff ausgebildeten Abschnitt davon eingebettet ist.

Gemäß einem Ausführungsbeispiel kann das Abtriebselement eine Verzahnung an einer äußeren Umfangsfläche davon aufweisen, welche dazu eingerichtet ist, mit einem Förderelement, insbesondere einer Gegenverzahnung eines Förderelements, der Lebensmittelproduktfördervorrichtung zusammenzuwirken. Somit kann ein Antreiben des Förderelements, insbesondere eines Förderbands, zum Fördern von Lebensmittelprodukten in zuverlässiger Weise realisiert werden.

Zusätzlich oder alternativ kann die Aufnahmeeinheit wenigstens einen Durchgangskanal umfassen, welcher dazu eingerichtet ist, wenigstens eine Versorgungsleitung für die Antriebseinheit aufzunehmen. Da die Aufnahmeeinheit bei bestimmungsgemäßer Verwendung hinsichtlich des rotatorischen Freiheitsgrads um eine Rotationsachse fest mit der Lebensmittelproduktfördervorrichtung verbunden ist, und somit vorzugsweise nicht um die Rotationsachse rotiert, können gemäß einem Ausführungsbeispiel jegliche Versorgungsleitungen, insbesondere Übertragungsleitungen, beispielsweise zur Übertragung von Energie (z. B. Strom) oder Informationen (z. B. Daten oder Signale), problemlos durch den Durchgangskanal von und/oder zu beispielsweise dem Antriebselement oder der Sensoreinheit geführt werden. Die Aufnahmeeinheit kann ferner einen Durchgangskanalausgang umfassen, welcher mit dem Durchgangskanal verbunden ist und dazu eingerichtet ist, die wenigstens eine Versorgungsleitung aus der Antriebseinheit heraus zu führen.

Das Antriebselement kann hinsichtlich eines rotatorischen Freiheitsgrads um die Rotationsachse fest mit der Aufnahmeeinheit verbunden sein. Das kann bedeuten, dass sich das Antriebselement im Betrieb nicht um die Rotationsachse dreht. Somit kann die zu bewegende Masse weiter auf nur das Abtriebselement sowie die dem Abtriebselement zugeordneten Elemente, insbesondere die von diesem angetriebenen Elemente, werden.

Die Aufnahmeeinheit kann in Bezug auf die Rotationsachse zwei axial entgegengesetzte Enden aufweisen, wobei die Aufnahmeeinheit an wenigstens einem oder an beiden der axial entgegengesetzten Enden einen Fixierungsabschnitt umfassen kann, welcher dazu eingerichtet ist, die Antriebseinheit an der Lebensmittelproduktfördervorrichtung zu fixieren. Der Fixierungsabschnitt kann hierbei mit Bohrungen, einem Flansch oder Spiegelflächen ausgebildet sein. Es kann somit ermöglicht werden, die Antriebseinheit über den oder die Fixierungsabschnitt(e) in eine Lebensmittelproduktfördervorrichtung zu integrieren, insbesondere die Antriebseinheit daran zu befestigen.

Gemäß einem weiteren Ausführungsbeispiel der erfindungsgemäßen Antriebseinheit kann das Abtriebselement durch eine Verschiebung in wenigstens einer zu der Rotationsachse im Wesentlichen parallelen Richtung von dem Trennelement zerstörungsfrei abnehmbar sein. Somit kann eine einfache Montage/Demontage zur Reinigung ermöglicht werden, da das Abtriebselement ohne Weiteres von dem Trennelement abgenommen werden kann. Zusätzlich oder alternativ können Lager an dem Trennelement vorgesehen sein, mit welchen das Abtriebselement axial gesichert bzw. positioniert werden kann. In einem Fall, in welchem das Trennelement ohne Lager ausgebildet ist, kann das Abtriebselement durch eine Verschiebung demnach in beiden zu der Rotationsachse im Wesentlichen parallelen Richtungen von dem Trennelement zerstörungsfrei abnehmbar sein. Im Falle eines einzigen Lagers, welches an dem Trennelement vorgesehen ist, kann eine axiale Verschiebung somit in einer zu der Rotationsachse im Wesentlichen parallelen Richtung durch das Lager verhindert sein. Durch eine entsprechend abnehmbare Gestaltung des oder der Lager(s) kann hier jedoch ebenfalls eine einfache Montage/Demontage gewährleistet werden.

Das Abtriebselement kann im Betrieb der Antriebseinheit im Wesentlichen keinen Kontakt zu dem Trennelement aufweisen. "Kein Kontakt" bedeutet hier insbesondere, dass durch Antrieb beziehungsweise Anregung des Antriebselements, insbesondere durch elektromagnetisch wirkende Kräfte, ein Luftspalt zwischen dem Trennelement und dem Abtriebselement erzeugt werden kann, wodurch das Abtriebselement angehoben wird und in eine schwebende Position in Bezug auf die nichtrotierenden Bauteile der Antriebseinheit gebracht wird. Hierbei kann ferner eine Zentrierung des Abtriebselements in Bezug auf die Antriebseinheit, insbesondere einen Abschnitt der Aufnahmeeinheit, ermöglicht werden.

Die Aufnahmeeinheit kann gemäß noch einem weiteren Ausführungsbeispiel ferner eine Ausnehmung umfassen, welche sich entlang eines Umfangs der Aufnahmeeinheit in Bezug auf die Rotationsachse erstreckt, wobei das Antriebselement vorzugsweise in der Ausnehmung angeordnet ist, wobei insbesondere die Ausnehmung nach radial außen durch das Trennelement abgedeckt ist. Die "radiale Richtung" kann hier eine radiale Richtung in Bezug auf die Rotationsachse sein. Das Antriebselement kann somit, in einem Längsschnitt bezüglich der Rotationsachse gesehen, von drei Seiten von der Aufnahmeeinheit umschlossen sein und an der vierten Seite, d.h. in radialer Richtung, von dem Trennelement bedeckt sein. Die vierte Seite kann in Bezug auf die radiale Richtung der Seite entsprechen, welche von der Rotationsachse am weitesten beabstandet angeordnet ist. Das Verhindern des Hindurchtretens von Flüssigkeiten und/oder Festkörpern von der dem Antriebselement zugewandten Seite des Trennelements zu der dem Abtriebselement zugewandten Seite des Trennelements und umgekehrt kann somit vereinfacht werden, da die Schnittstelle oder der Überlappungsbereich von Trennelement und Aufnahmeeinheit nur an einer Seite für Flüssigkeiten und/oder Festkörper durchtrittsverhindernd ausgebildet werden muss. Ferner kann das Trennelement als Hülse ausgebildet werden, welche die Aufnahmeeinheit, an welcher das Antriebselement aufgenommen ist, von radial außen begrenzt. Auch kann die Aufnahmeeinheit mehrere entlang der Rotationsachse voneinander beabstandet angeordnete Ausnehmungen umfassen, wobei vorzugsweise in jeder Ausnehmung ein entsprechendes Antriebselement angeordnet sein kann.

In einer Weiterbildung der erfindungsgemäßen Antriebseinheit kann die Antriebseinheit wenigstens zwei Antriebselemente umfassen, welche dazu eingerichtet sind, ein gemeinsames, d.h. ein und dasselbe, Abtriebselement anzutreiben. Ein Abtriebselement kann somit durch mehrere Antriebselemente angetrieben werden, wodurch das Drehmoment erhöht werden kann, mit welchem das Abtriebselement rotierbar ist. Beispielsweise könnte eine zweispurige Lebensmittelproduktfördereinrichtung jeweils ein breiteres Abtriebselement umfassen, welches wiederum durch jeweils zwei Antriebselemente angetrieben wird. Ein "breites" Abtriebselement kann hier bedeuten, dass das Abtriebselement, welches im Wesentlichen hohlzylinderförmig ausgebildet sein kann, in Bezug auf die Rotationsachse eine größere Längserstreckung aufweist.

Um die Antriebsleistung der Antriebseinheit erhöhen zu können, wird gemäß einem weiteren Ausführungsbeispiel vorgeschlagen, dass die Antriebseinheit ferner einen Verstärkungsbereich aufweist, welcher dazu eingerichtet ist, das durch das Antriebselement erzeugte Magnetfeld zu verstärken.

Gemäß einer Weiterbildung des letztgenannten Ausführungsbeispiels kann der Verstärkungsbereich, vorzugsweise aus einer oder mehreren Lagen, aus einem, insbesondere ferromagnetischen, Verstärkungsmaterial gebildet sein. Das Verstärkungsmaterial kann dabei grundsätzlich ein beliebiges dem Fachmann bekanntes und zu dem angegebenen Zweck geeignetes Material, vorzugsweise ein beliebiges ferromagnetisches Material, wie martensitischer Stahl, ferritischer Stahl, Eisen, ein ferromagnetisches Metall oder dergleichen sein. Sofern das Verstärkungsmaterial aus einer oder mehreren Lagen gebildet ist, kann jede Lage vorzugsweise im Wesentlichen scheibenförmig sein und weiter vorzugsweise in einer zu der Rotationsachse im Wesentlichen parallelen Richtung auf die Aufnahmeeinheit aufsetzbar sein. Auch können Abschnitte des Verstärkungsbereichs in Umfangsrichtung zwischen benachbarten Abschnitten des Antriebselements angeordnet sein, insbesondere dann, wenn das Antriebselement mehrere in Umfangsrichtung voneinander beabstandet angeordnete Antriebselementabschnitte, vorzugsweise Statorabschnitte, umfasst. Jeder Antriebselementabschnitt oder Statorabschnitt kann beispielsweise eine Spule oder eine oder mehrere Wicklungen umfassen. Ferner ist das Verstärkungsmaterial in Bezug auf die Rotationsachse vorzugsweise nur radial innerhalb des Trennelements angeordnet.

Nach einem zweiten Gesichtspunkt betrifft die Erfindung eine Antriebsanordnung, welche eine Mehrzahl vorstehend beschriebener Antriebseinheiten umfasst. Demensprechend treffen sämtliche vorstehend in Bezug auf die erfindungsgemäße Antriebseinheit getätigten Aussagen, Vorteile und Wirkungen auch auf die erfindungsgemäße Antriebsanordnung zu und umgekehrt.

Vorzugsweise kann ein Abstand zweier entlang der Rotationsachse benachbarter Antriebseinheiten der Antriebsanordnung, insbesondere der Antriebselemente davon, so gewählt sein, dass das Magnetfeld eines Antriebselements einer Antriebseinheit das Magnetfeld oder das Verhalten des Abtriebselements einer benachbarten Antriebseinheit nicht störend beeinflusst. Dabei sollte der Abstand zweier entlang der Rotationsachse benachbarter Antriebseinheiten, insbesondere der Antriebelemente davon, vorzugsweise größer sein, als eine Erstreckung des durch elektromagnetisch wirkende Kräfte zwischen dem Trennelement und dem Abtriebselement erzeugten Luftspalts in einer zu der Rotationsachse im Wesentlichen orthogonalen Richtung. Um dennoch eine besonders kompakte Anordnung zu erhalten, kann der Abstand zweier entlang der Rotationsachse benachbarter Antriebseinheiten, insbesondere der Antriebelemente davon, vorzugsweise höchstens das Zwanzigfache, weiter vorzugsweise höchstens das Zehnfache, besonders bevorzugt höchstens das Fünffache, noch bevorzugter höchstens das Doppelte, der Erstreckung des durch elektromagnetisch wirkende Kräfte zwischen dem Trennelement und dem Abtriebselement erzeugten Luftspalts in der zu der Rotationsachse im Wesentlichen orthogonalen Richtung betragen.

Gemäß einer Weiterbildung des letztgenannten Ausführungsbeispiels können die Antriebselemente von wenigstens zwei oder sämtlicher der Antriebseinheiten an einer gemeinsamen Aufnahmeeinheit aufgenommen sein. Hierdurch kann sichergestellt werden, dass die Lebensmittelproduktfördervorrichtung in einer zu der Rotationsachse im Wesentlichen parallelen Richtung möglichst kompakt ausgebildet ist und/oder in einer zu der Rotationsachse im Wesentlichen parallelen Richtung benachbarte Spuren der Lebensmittelproduktfördervorrichtung möglichst eng nebeneinander angeordnet sein können.

Ferner kann zwischen jeweils zwei in einer zu der Rotationsachse im Wesentlichen parallelen Richtung benachbarten Antriebseinheiten, vorzugsweise Antriebselementen, ein Abschirmbereich, vorgesehen sein, welcher sich insbesondere ausgehend von der, vorzugsweise gemeinsamen, Aufnahmeeinheit entlang einer zu der Rotationsachse im Wesentlichen orthogonalen Richtung nach radial außen erstrecken kann. Jeder Abschirmbereich kann dazu beitragen, dass sich die Magnetfelder benachbarter Antriebseinheiten nicht in unerwünschter Weise überlagern oder stören.

Der oder jeder Abschirmbereich kann, vorzugsweise aus einer oder mehreren Lagen, aus einem, vorzugsweise diamagnetischen, Abschirmmaterial gebildet sein. Das Abschirmmaterial kann dabei grundsätzlich ein beliebiges dem Fachmann bekanntes und zu dem angegebenen Zweck geeignetes Material, beispielsweise Kupfer, ein kupferhaltiges Material, ein Kunststoff, vorzugsweise Polyoxymethylen (POM), Polyethylen (PE), Polytetrafluorethylen (PTFE), Polypropylen (PP), oder dergleichen, sein. Sofern das Abschirmmaterial aus einer oder mehreren Lagen gebildet ist, kann jede Lage vorzugsweise im Wesentlichen scheibenförmig sein und weiter vorzugsweise in einer zu der Rotationsachse im Wesentlichen parallelen Richtung auf die Aufnahmeeinheit aufsetzbar sein. Vorzugsweise kann sich das Abschirmmaterial dabei nur radial außerhalb der Aufnahmeeinheit erstrecken, was beispielsweise durch scheibenförmige Lagen mit einer entsprechenden Durchgangsbohrung in einfacher Weise realisierbar ist.

Nach einem dritten Gesichtspunkt betrifft die Erfindung eine Lebensmittelproduktfördervorrichtung, umfassend wenigstens eine vorstehend beschriebene erfindungsgemäße Antriebseinheit oder eine vorstehend beschriebene erfindungsgemäße Antriebsanordnung. Die Lebensmittelproduktfördervorrichtung kann beispielsweise ein umlaufendes Förderelement, insbesondere ein Förderband, und eine der Antriebseinheit entgegengesetzte Umlenkrolle umfassen. Demensprechend treffen sämtliche vorstehend in Bezug auf die erfindungsgemäße Antriebseinheit und/oder Antriebsanordnung getätigten Aussagen, Vorteile und Wirkungen auch auf die erfindungsgemäße Produktfördervorrichtung zu und umgekehrt.

In Weiterbildung des dritten Gesichtspunkts der Erfindung kann die Lebensmittelproduktfördervorrichtung als eine mehrspurige Lebensmittelproduktfördervorrichtung ausgebildet sein, wobei jeder Spur wenigstens eine erfindungsgemäße Antriebseinheit zugeordnet sein kann. Sofern die mehrspurige Lebensmittelproduktfördervorrichtung eine erfindungsgemäße Antriebsanordnung umfasst, kann die Antriebsanordnung wenigstens eine der Anzahl von Spuren der Lebensmittelproduktfördervorrichtung entsprechende Anzahl von Antriebseinheiten umfassen. Dabei können die Spuren der mehrspurigen Lebensmittelproduktfördervorrichtung vorzugsweise individuell und unabhängig voneinander antreibbar sein. Ferner können die Antriebseinheiten der mehrspurigen Lebensmittel-produktfördervorrichtung vorzugsweise auf einer gemeinsamen Achse angeordnet sein, welche im Wesentlichen parallel, vorzugsweise koaxial, zu der Rotationsachse verläuft.

Nach einem vierten Gesichtspunkt betrifft die Erfindung ein Lebensmittelverarbeitungssystem, umfassend eine Lebensmittelverarbeitungseinheit, insbesondere eine Aufschneidemaschine, und wenigstens eine Lebensmittelproduktfördervorrichtung gemäß dem dritten Gesichtspunkt der Erfindung. Die Lebensmittelverarbeitungseinheit kann beispielsweise eine Aufschneidemaschine, insbesondere ein Slicer, sein. Auch hierbei treffen sämtliche vorstehend in Bezug auf die erfindungsgemäße Antriebseinheit und/oder Antriebsanordnung und/oder Lebensmittelproduktfördervorrichtung getätigten Aussagen, Vorteile und Wirkungen auch auf das erfindungsgemäße Lebensmittelverarbeitungssystem zu und umgekehrt.

Die Erfindung wird im Folgenden mit Bezug auf die beigefügten Zeichnungen anhand von Ausführungsbeispielen näher erläutert werden. Es stellen dar:
- Figur 1: eine schematische Schnittansicht einer erfindungsgemäßen Antriebsanordnung, welche erfindungsgemäße Antriebseinheiten umfasst;
- Figur 2: eine perspektivische Teilschnittansicht einer erfindungsgemäßen Antriebsanordnung mit erfindungsgemäßen Antriebseinheiten, in welcher einige Teile bzw. Abschnitte von Teilen entlang einer Rotationsachse geschnitten dargestellt sind;
- Figur 3: eine Seitenansicht der erfindungsgemäßen Antriebsanordnung gemäß Fig. 2,
- Figur 4: eine schematische Ansicht einer erfindungsgemäßen Lebensmittelproduktfördervorrichtung, welche wenigstens eine erfindungsgemäße Antriebseinheit oder eine erfindungsgemäße Antriebsanordnung umfasst; und
- Figur 5: eine schematische Ansicht eines erfindungsgemäßen Lebensmittelverarbeitungssystems, welches eine Lebensmittelverarbeitungseinheit mit einer erfindungsgemäßen Lebensmittelproduktfördervorrichtung umfasst.

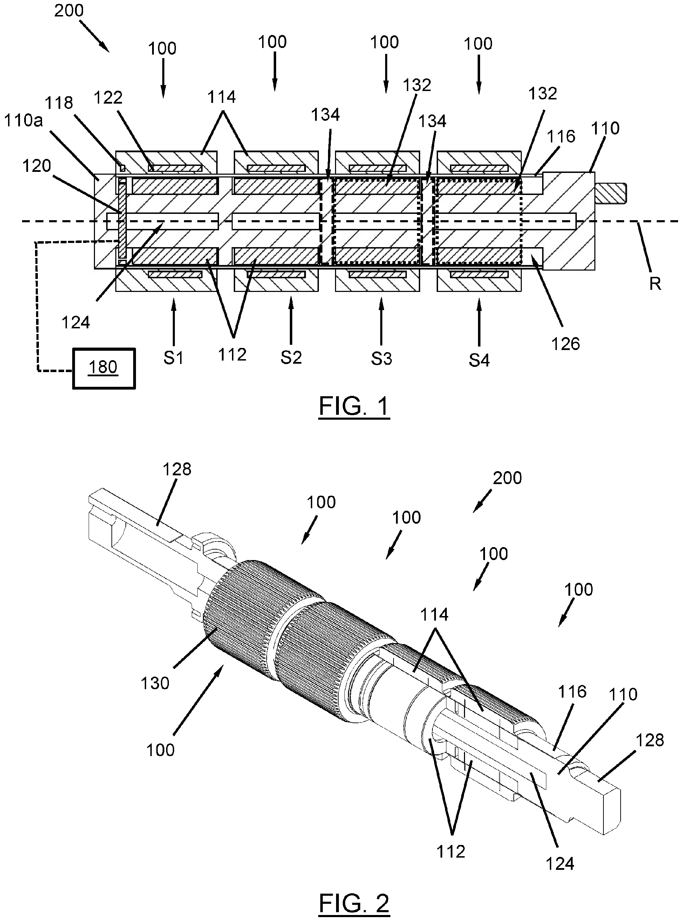

In Figur 1 sind erfindungsgemäße Antriebseinheiten gemäß einem Ausführungsbeispiel schematisch in einer Schnittansicht dargestellt und jeweils allgemein durch das Bezugszeichen 100 gekennzeichnet. Die Mehrzahl von Antriebseinheiten 100 in Fig. 1 bilden dabei eine Antriebsanordnung 200.

Figur 1 stellt hierbei ein Ausführungsbeispiel dar, bei welchem die Antriebseinheiten 100 eine gemeinsame Aufnahmeeinheit 110 umfassen. Es ist jedoch alternativ auch denkbar, dass jede Antriebseinheit 100 eine entsprechende Aufnahmeeinheit 110 umfasst. Die jeweiligen Antriebseinheiten 100 können entlang einer Rotationsachse R benachbart im Wesentlichen koaxial zueinander angeordnet sein. Es sei bereits hier darauf hingewiesen, dass die Antriebseinheiten 100 jeweils dazu eingerichtet sein können, ein Förderelement (nicht dargestellt), insbesondere ein Förderband, einer Lebensmittelproduktfördervorrichtung 140 anzutreiben. Somit kann das vorliegende Ausführungsbeispiel einen Abschnitt einer mehrspurigen Lebensmittelproduktfördervorrichtung 140 darstellen, welche mehrere unabhängig voneinander oder synchronisiert antreibbare Antriebseinheiten 100 umfasst.

Die Antriebseinheiten 100 umfassen jeweils ein Antriebselement 112, welches dazu eingerichtet ist, ein drehbares Magnetfeld zu erzeugen, und ein Abtriebselement 114, welches dazu eingerichtet ist, mittels des durch das Antriebselement 112 erzeugten Magnetfelds um die Rotationsachse R drehend angetrieben zu werden. Ferner umfassen die Antriebseinheiten 100 ein gemeinsames Trennelement 116, welches zwischen den jeweiligen Antriebselementen 112 und Abtriebselementen 114 angeordnet ist und dazu eingerichtet ist, ein Hindurchtreten von Flüssigkeiten und/oder Festkörpern von einer den jeweiligen Abtriebselementen 114 zugewandten Seite des Trennelements 116 zu einer den jeweiligen Antriebselementen 112 zugewandten Seite des Trennelements 116 und/oder umgekehrt im Wesentlichen vollständig zu unterbinden. In dem dargestellten Ausführungsbeispiel umfassen die Antriebseinheiten 100 ein gemeinsames Trennelement 116 in Form einer Trennhülse. Es ist jedoch auch denkbar, dass jede der Antriebseinheiten 100, wie auch in Bezug auf die Aufnahmeeinheit 110 schon erwähnt, ein gesondert ausgebildetes Trennelement 116 aufweist.

Die oder auch nur ein Teil der Antriebseinheiten 100 können/kann ferner jeweils einen Signalgeber 118, welcher in dem Abtriebselement 114 integriert ist, und eine Sensoreinheit 120 umfassen, welche mit einer in Fig. 1 lediglich schematisch dargestellten Steuereinheit 180 in Signalverbindung steht. Hierbei können der Signalgeber 118, welcher in dem sich drehenden Abtriebselement 114 angeordnet ist, und die Sensoreinheit 120 gemeinsam dazu eingerichtet sein, Informationen in Bezug auf beispielsweise eine Position, eine Drehzahl und/oder eine Drehrichtung des Abtriebselements 114 zu erfassen. Somit kann die Steuereinheit 180 dazu eingerichtet sein, die Informationen von der Sensoreinheit 120 zu erhalten und das Antriebselement 112, insbesondere das Magnetfeld des Antriebselements 112, unter Verwendung der Informationen der Sensoreinheit 180 zu steuern. Für die Übersichtlichkeit der Figur 1 wurde lediglich der Signalgeber 118 und die Sensoreinheit 120 einer der Antriebseinheiten 100 bildlich dargestellt. Alle Merkmale hinsichtlich des Signalgebers 118 und der Sensoreinheit 120 der einen Antriebseinheit 100 sind somit gewünschtenfalls analog auf die anderen Antriebseinheiten 100 anwendbar.

Neben dem Signalgeber 118 kann hier jeweils ein Permanentmagnet 122 in das jeweilige Abtriebselement 114 der Antriebseinheiten 100 integriert sein. Das Abtriebselement 114 kann wenigstens teilweise aus Kunststoff gebildet sein. Der Signalgeber 118 und der Permanentmagnet 122 sind hier beispielsweise vollständig umschlossen in dem Abtriebselement 114 der Antriebseinheiten 100 integriert.

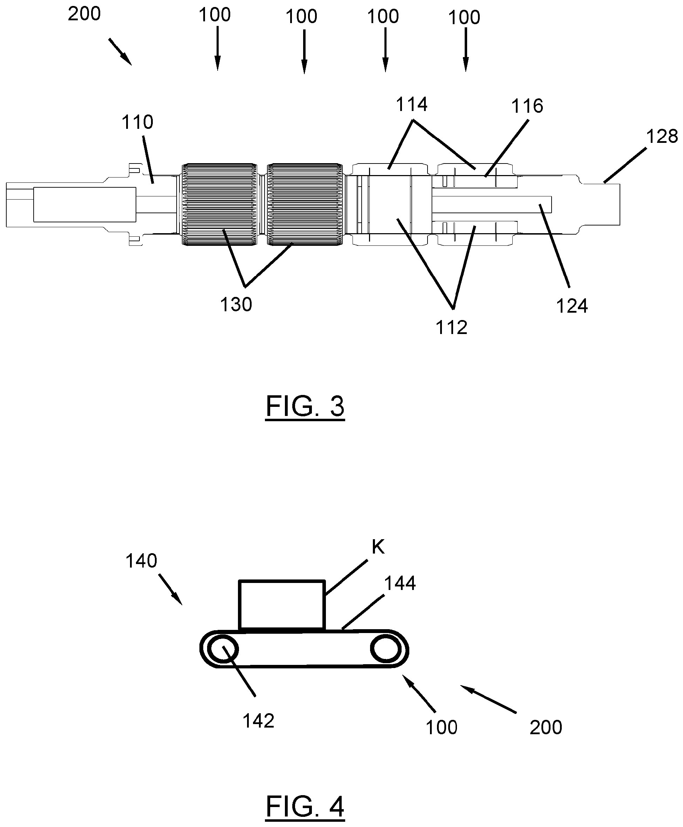

Zum Verbinden der verschiedenen Bauteile, insbesondere des Antriebselements 112 und der Sensoreinheit 120 der Antriebseinheiten 100, mit Versorgungs- und/oder Datenleitungen umfasst die Aufnahmeeinheit 110 hier einen Durchgangskanal 124. Der Durchgangskanal 124 kann dabei entgegen der Darstellung von Fig. 1 auch entlang der Rotationsachse R durchgehend, d.h. ohne Unterbrechungen zwischen benachbarten Antriebseinheiten 100, ausgebildet sein, wie auch in den Fig. 2 und 3 angedeutet.

Ferner umfasst die Aufnahmeeinheit 110 in dem Ausführungsbeispiel der Figur 1 Ausnehmungen 126, in welchen jeweils ein Antriebselement 112 der Antriebseinheiten 100 angeordnet ist.

Um die Antriebsleistung einer Antriebseinheit 100 zu erhöhen, kann die oder jede Antriebseinheit 100 ferner einen Verstärkungsbereich 132 aufweisen, welcher dazu eingerichtet ist, das durch das Antriebselement 112 erzeugte Magnetfeld zu verstärken. Der Verstärkungsbereich 132 ist dabei in Fig. 1 lediglich durch ein gestricheltes Rechteck für die Antriebseinheiten 100 der Spuren S3 und S4 schematisch angedeutet. Der Verstärkungsbereich 132 kann beispielsweise aus einer oder mehreren Lagen, aus einem, insbesondere ferromagnetischen, Verstärkungsmaterial, wie martensitischem Stahl, ferritischem Stahl, Eisen, einem ferromagnetischen Metall oder dergleichen, gebildet sein. Jede Lage (in Fig. 1 nicht näher dargestellt) kann vorzugsweise im Wesentlichen scheibenförmig sein und weiter vorzugsweise in einer zu der Rotationsachse R im Wesentlichen parallelen Richtung auf die Aufnahmeeinheit 110 aufsetzbar sein, ähnlich dem Zusammensetzen eines Kupplungspakets mit mehreren Lagen von Lamellenkupplungen. Ferner ist das Verstärkungsmaterial in Bezug auf die Rotationsachse R vorzugsweise nur radial innerhalb des Trennelements 116 angeordnet.

Ferner kann zwischen jeweils zwei in einer zu der Rotationsachse R im Wesentlichen parallelen Richtung benachbarten Antriebselementen 112 ein Abschirmbereich 134 vorgesehen sein, welcher sich ausgehend von der, vorzugsweise gemeinsamen, Aufnahmeeinheit 110 entlang einer zu der Rotationsachse R im Wesentlichen orthogonalen Richtung nach radial außen erstrecken kann. Die Abschirmbereiche 134 sind in Fig. 1 ebenfalls zwischen den Spuren S2 und S3 bzw. S3 und S4 durch ein gestricheltes Rechteck schematisch angedeutet.

Auch jeder Abschirmbereich 134 kann, vorzugsweise aus einer oder mehreren Lagen, aus einem, vorzugsweise diamagnetischen, Abschirmmaterial, beispielsweise Kupfer, einem kupferhaltigen Material, einem Kunststoff, vorzugsweise Polyoxymethylen (POM), Polyethylen (PE), Polytetrafluorethylen (PTFE), Polypropylen (PP), oder dergleichen, gebildet sein. Sofern das Abschirmmaterial aus einer oder mehreren Lagen gebildet ist, kann ebenfalls jede Lage vorzugsweise im Wesentlichen scheibenförmig sein und weiter vorzugsweise in einer zu der Rotationsachse R im Wesentlichen parallelen Richtung auf die Aufnahmeeinheit 110 aufsetzbar sein.

Um die Montierbarkeit der vorstehend beschriebenen Komponenten zu ermöglichen, kann die Aufnahmeeinheit 110 ferner einen Deckelabschnitt 110a aufweisen, welcher im Wesentlichen entlang einer zu der Rotationsachse R parallelen Richtung von der Aufnahmeeinheit 110 abnehmbar und auf diese aufsetzbar ist.

Figur 2 und Figur 3 sind eine perspektivische Ansicht beziehungsweise eine Seitenansicht erfindungsgemäßer Antriebseinheiten 100 an einer gemeinsamen Aufnahmeeinheit 110, in welcher einige Teile bzw. Abschnitte von Teilen entlang der Rotationsachse R geschnitten dargestellt sind. Die Antriebseinheiten 100 in den Fig. 2 und 3 bilden dabei ebenfalls eine erfindungsgemäße Antriebsanordnung 200.

Hierbei weist die Aufnahmeeinheit 110 in Bezug auf die Rotationsachse R zwei axial entgegengesetzte Enden auf, an welchen jeweils ein Fixierungsabschnitt 128 bereitgestellt ist, welcher dazu eingerichtet ist, die Aufnahmeeinheit 110 an einer Lebensmittelproduktfördervorrichtung 140 zu fixieren.

Darüber hinaus kann das Abtriebselement 114 einer jeweiligen Antriebseinheit 100 eine Verzahnung 130 an einer äußeren Umfangsfläche davon aufweisen, welche dazu eingerichtet ist, mit einer Gegenverzahnung eines in den Fig. 2 und 3 nicht dargestellten Förderelements, wie eines Förderbands, einer entsprechenden Spur S1, S2, S3, S4 einer mehrspurigen Lebensmittelproduktfördervorrichtung 140 zusammenzuwirken. Somit sind die Antriebseinheiten 100 in der Lage, jeweils ein Förderelement anzutreiben.

In Figur 4 eine erfindungsgemäße Lebensmittelproduktfördervorrichtung 140 gemäß einem Ausführungsbeispiel schematisch dargestellt und allgemein durch das Bezugszeichen 140 gekennzeichnet.

Die Lebensmittelproduktfördervorrichtung 140 kann dabei als eine einspurige oder mehrspurige Lebensmittelproduktfördervorrichtung ausgebildet sein, wobei in der Seitenansicht gemäß Figur 4 lediglich eine äußerste Spur der Lebensmittelproduktfördervorrichtung 140 erkennbar ist.

Jede Spur S1, S2, S3, S4 kann hier eine erfindungsgemäße Antriebseinheit 100 und eine Umlenkrolle 142 sowie ein Förderelement 144, insbesondere Förderband umfassen, welches dazu eingerichtet ist, beispielsweise ein Produkt-Kaliber K aus einem Lebensmittel, wie Wurst, Käse oder Fleisch, zu fördern. Es ist jedoch auch denkbar, dass die Lebensmittelproduktfördervorrichtung 140 anstelle der Umlenkrolle 142 eine der Antriebseinheit 100 entsprechende weitere Antriebseinheit (nicht dargestellt) umfasst, welche synchronisiert mit der Antriebseinheit 100 betrieben werden kann.

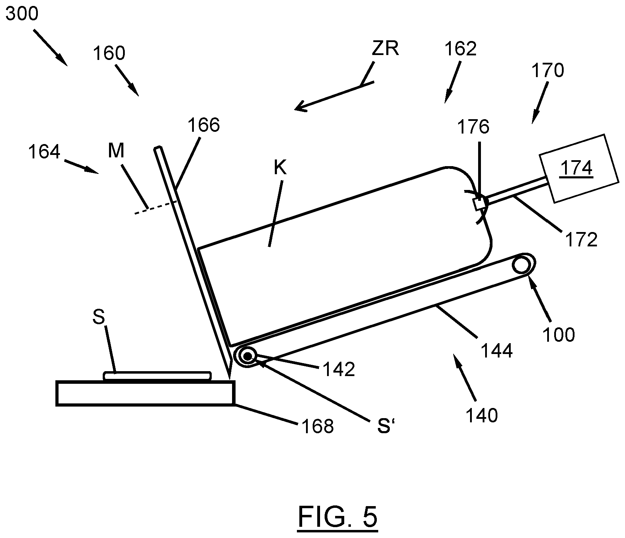

In Figur 5 ist ein Lebensmittelverarbeitungssystem 300 dargestellt, welches eine Lebensmittelverarbeitungseinheit in Form einer Aufschneidemaschine 160 und eine erfindungsgemäße Lebensmittelproduktfördervorrichtung 140 umfasst. Die Aufschneidemaschine 160 kann dabei als eine einspurige oder mehrspurige Aufschneidemaschine ausgebildet sein, wobei in der Seitenansicht gemäß Figur 5 lediglich eine äußerste Spur der Aufschneidemaschine 160 erkennbar ist. Bei einer mehrspurigen Aufschneidemaschine 100 kann jeder Spur S1, S2, S3, S4 entsprechend wenigstens eine Lebensmittelproduktfördervorrichtung 140 zugeordnet sein.

Die Aufschneidemaschine 160 umfasst eine Zuführeinheit 162, welche dazu eingerichtet ist, wenigstens ein Produkt-Kaliber K entlang einer Zuführrichtung ZR zu einer Schneideinheit 164 zuzuführen. Die Schneideinheit 164 kann dabei ein Messer 166 umfassen, welches, beispielsweise mittels einer elektrischen Antriebseinheit (nicht dargestellt), um eine Messerrotationsachse M rotierend antreibbar sein kann. Das Messer 166 kann beispielsweise als ein Sichelmesser ausgebildet sein, welches vorzugsweise einen um die Messerrotationsachse M variierenden, insbesondere in Drehrichtung um die Messerrotationsachse M zunehmenden, Radius aufweist.

Folglich kann das Messer 166 bei einer Teildrehung um die Messerrotationsachse M zunächst einen Schneidspalt freigeben und ein Vorrücken des Produkt-Kalibers K in der Zuführrichtung ZR ermöglichen und bei einer weiteren Drehung um die Messerrotationsachse M jeweils eine Scheibe S von dem Produkt-Kaliber K abtrennen. Die Scheiben S können dann auf eine Portioniereinheit 168, beispielsweise in Form eines Portionierbands, herabfallen. Beispielsweise können durch das Stapeln oder Schindeln mehrerer Scheiben S entsprechende Portionen auf der Portioniereinheit 168 gebildet werden. Von dort aus können die Portionen zu einer (hier nicht dargestellten) Einlegeeinheit in Form eines Bandeinlegers oder dergleichen weiterbefördert werden, welcher dazu eingerichtet sein kann, die Portionen einer nachgeordneten Bearbeitungsvorrichtung in Form einer Verpackungsmaschine oder dergleichen zuzuführen, welche hier jedoch ebenfalls nicht dargestellt ist.

Das wenigstens eine Produkt-Kaliber K kann durch eine erfindungsgemäße Lebensmittelproduktfördervorrichtung 140 gefördert werden, welche eine erfindungsgemäße Antriebseinheit 100, eine Umlenkrolle 142 und ein Förderelement 144 in Form eines Förderbands umfasst. In dem dargestellten Ausführungsbeispiel kann die Lebensmittelproduktfördervorrichtung 140 beispielweise um eine Schwenkachse S' schwenkbar sein, um nach einer Beladung der Aufschneidemaschine 160 für den Aufschneidebetrieb von einer im Wesentlichen horizontalen Beladestellung in die in Fig. 5 dargestellte Aufschneidestellung hochgeschwenkt werden zu können.

Das oder jedes Produkt-Kaliber K kann während des Aufschneidens von einer Greifereinheit 170 ergriffen und gehalten werden. Die Greifereinheit 170 kann wenigstens einen Greifer 172 umfassen, welcher dazu eingerichtet sein kann, das Produkt-Kaliber K an einem der Schneideinheit 164 abgewandten Ende davon zu greifen. Im vorliegenden Ausführungsbeispiel umfasst die Greifereinheit 170 dabei wenigstens den Greifer 172, wobei im Falle einer mehrspurigen Aufschneidemaschine pro Spur ein dem Greifer 172 entsprechend ausgebildeter weiterer Greifer vorgesehen sein kann. Der Greifer 172 oder die Greifer können an einem gemeinsamen Greiferschlitten 174 angeordnet sein. Ferner kann dem Greifer 172, sowie optional jedem weiteren Greifer, ein Erkennungssensor 176 zugeordnet sein, welcher beispielsweise dazu eingerichtet sein kann, zu erkennen, wann der Greifer 172 das Produkt-Kaliber K berührt.

Ferner kann die Aufschneidemaschine 160 eine hier nicht dargestellte Aufschneidemaschine-Steuereinheit umfassen, mittels welcher wenigstens die Schneideinheit 164 und die Zuführeinheit 162 der Aufschneidemaschine 160 sowie vorzugsweise sämtliche weitere bewegliche Teile der Aufschneidemaschine 160 gesteuert werden können.

## Patentansprüche

1. Antriebseinheit (100) für eine Lebensmittelproduktfördervorrichtung (140), umfassend:
eine Aufnahmeeinheit (110), welche dazu ausgebildet und bestimmt ist, mit der Lebensmittelproduktfördervorrichtung (140) verbunden zu werden, und welche dazu eingerichtet ist, ein Antriebselement (112) aufzunehmen, welches dazu eingerichtet ist, ein, vorzugsweise drehbares, Magnetfeld zu erzeugen, und
ein magnetisch betätigbares Abtriebselement (114), welches dazu eingerichtet ist, mittels des durch das Antriebselement (112) erzeugten Magnetfelds um eine Rotationsachse (R) drehend angetrieben zu werden,
wobei die Antriebseinheit (100) ferner ein Trennelement (116) umfasst, welches zwischen dem Antriebselement (112) und dem Abtriebselement (114) angeordnet ist und dazu eingerichtet ist, ein Hindurchtreten von Flüssigkeiten und/oder Festkörpern von einer dem Abtriebselement (114) zugewandten Seite des Trennelements (116) zu einer dem Antriebselement (112) zugewandten Seite des Trennelements (116) und/oder umgekehrt im Wesentlichen vollständig zu unterbinden.

2. Antriebseinheit (100) nach Anspruch 1,
welche ferner einen Signalgeber (118), welcher vorzugsweise in dem Abtriebselement (114) integriert ist, und eine Sensoreinheit (120) umfasst, welche mit einer Steuereinheit (180) der Antriebseinheit (100) in Signalverbindung steht, wobei der Signalgeber (118) und die Sensoreinheit (120) gemeinsam dazu eingerichtet sind, Informationen in Bezug auf die Antriebseinheit (100), vorzugsweise das Abtriebselement (114), insbesondere in Bezug auf eine Position, eine Drehzahl und/oder eine Drehrichtung des Abtriebselements (114), zu erfassen,
wobei die Steuereinheit (180) vorzugsweise dazu eingerichtet ist, die Informationen von der Sensoreinheit (120) zu erhalten und das Antriebselement (112), insbesondere das Magnetfeld des Antriebselements (112), unter Verwendung der Informationen der Sensoreinheit (120) zu steuern.

3. Antriebseinheit (100) nach einem der vorhergehenden Ansprüche, wobei das Abtriebselement (114) wenigstens teilweise aus Kunststoff ausgebildet ist,
und/oder
wobei das Abtriebselement (114) einen Permanentmagnet (122) umfasst, welcher vorzugsweise in das Abtriebselement (114) eingebettet ist.

4. Antriebseinheit (100) nach einem der vorhergehenden Ansprüche, wobei das Abtriebselement (114) eine Verzahnung (130) an einer äußeren Umfangsfläche davon aufweist, welche dazu eingerichtet ist, mit einem Förderelement (144), insbesondere einer Gegenverzahnung eines Förderelements (144), der Lebensmittelproduktfördervorrichtung (140) zusammenzuwirken,
und/oder
wobei die Aufnahmeeinheit (110) wenigstens einen Durchgangskanal (124) umfasst, welcher dazu eingerichtet ist, wenigstens eine Versorgungsleitung für die Antriebseinheit (100) aufzunehmen.

5. Antriebseinheit (100) nach einem der vorhergehenden Ansprüche, wobei das Antriebselement (112) hinsichtlich eines rotatorischen Freiheitsgrads um die Rotationsachse (R) fest mit der Aufnahmeeinheit (110) verbunden ist.

6. Antriebseinheit (100) nach einem der vorhergehenden Ansprüche, wobei die Aufnahmeeinheit (110) in Bezug auf die Rotationsachse (R) zwei axial entgegengesetzte Enden aufweist, wobei die Aufnahmeeinheit (110) an wenigstens einem oder an beiden der axial entgegengesetzten Enden einen Fixierungsabschnitt (128) umfasst, welcher dazu eingerichtet ist, die Antriebseinheit (100) an der Lebensmittelproduktfördervorrichtung (140) zu fixieren.

7. Antriebseinheit (100) nach einem der vorhergehenden Ansprüche, wobei das Abtriebselement (114) durch eine Verschiebung in wenigstens einer zu der Rotationsachse (R) im Wesentlichen parallelen Richtung von dem Trennelement (116) zerstörungsfrei abnehmbar ist, und/oder
wobei das Abtriebselement (114) im Betrieb der Antriebseinheit (100) im Wesentlichen keinen Kontakt zu dem Trennelement (116) aufweist.

8. Antriebseinheit (100) nach einem der vorhergehenden Ansprüche, wobei die Aufnahmeeinheit (110) eine Ausnehmung (126) umfasst, welche sich entlang eines Umfangs der Aufnahmeeinheit (110) in Bezug auf die Rotationsachse (R) erstreckt, wobei das Antriebselement (112) vorzugsweise in der Ausnehmung (126) angeordnet ist, wobei insbesondere die Ausnehmung (126) nach radial außen durch das Trennelement (116) abgedeckt ist,
und/oder
wobei die Antriebseinheit (100) wenigstens zwei Antriebselemente (112) umfasst, welche dazu eingerichtet sind, ein gemeinsames Abtriebselement (114) anzutreiben.

9. Antriebseinheit (100) nach einem der vorhergehenden Ansprüche, wobei die Antriebseinheit (100) ferner einen Verstärkungsbereich (132) aufweist, welcher dazu eingerichtet ist, das durch das Antriebselement (112) erzeugte Magnetfeld zu verstärken,
insbesondere wobei der Verstärkungsbereich (132), vorzugsweise aus einer oder mehreren Lagen, aus einem, insbesondere ferromagnetischen, Verstärkungsmaterial gebildet ist, wobei vorzugsweise das Verstärkungsmaterial in Bezug auf die Rotationsachse (R) nur radial innerhalb des Trennelements (116) angeordnet ist.

10. Antriebsanordnung (200), umfassend eine Mehrzahl von Antriebseinheiten (100) nach einem der Ansprüche 1 bis 9.

11. Antriebsanordnung (200) nach Anspruch 10,
wobei die Antriebselemente (112) von wenigstens zwei oder sämtlicher der Antriebseinheiten (100) an einer gemeinsamen Aufnahmeeinheit (110) aufgenommen sind, und/oder
wobei zwischen jeweils zwei in einer zu der Rotationsachse (R) im Wesentlichen parallelen Richtung benachbarten Antriebseinheiten (100), vorzugsweise Antriebselementen (112), ein Abschirmbereich (134), vorgesehen ist,
welcher sich insbesondere ausgehend von der, vorzugsweise gemeinsamen, Aufnahmeeinheit (110) entlang einer zu der Rotationsachse (R) im Wesentlichen orthogonalen Richtung nach radial außen erstreckt,
wobei vorzugsweise der oder jeder Abschirmbereich (134), vorzugsweise aus einer oder mehreren Lagen, aus einem, vorzugsweise diamagnetischen, Abschirmmaterial gebildet ist.

12. Lebensmittelproduktfördervorrichtung (140), umfassend wenigstens eine Antriebseinheit (100) nach einem der Ansprüche 1 bis 9 oder eine Antriebsanordnung (200) nach einem der Ansprüche 10 bis 11.

13. Lebensmittelproduktfördervorrichtung (140) nach dem vorhergehenden Anspruch,
wobei die Lebensmittelproduktfördervorrichtung (140) als eine mehrspurige Lebensmittelproduktfördervorrichtung (140) ausgebildet ist und wobei jeder Spur (S1, S2, S3, S4) wenigstens eine Antriebseinheit (100) zugeordnet ist.

14. Lebensmittelproduktfördervorrichtung (140) nach Anspruch 12,
wobei die Lebensmittelproduktfördervorrichtung (140) als eine mehrspurige Lebensmittelproduktfördervorrichtung (140) ausgebildet ist und wobei die Antriebsanordnung (200) wenigstens eine der Anzahl von Spuren (S1, S2, S3, S4) der Lebensmittelproduktfördervorrichtung (140) entsprechende Anzahl von Antriebseinheiten (100) umfasst.

15. Lebensmittelverarbeitungssystem (300), umfassend eine Lebensmittelverarbeitungseinheit (160), insbesondere eine Aufschneidemaschine, und wenigstens eine Lebensmittelproduktfördervorrichtung (140) nach einem der Ansprüche 12 bis 14.
